# EUROPEAN PATENT SPECIFICATION

(11) **EP 2 991 345 B1**
(45) Date of publication and mention of the grant of the patent: **10.10.2018**
(21) Application number: 15182826.6
(22) Date of filing: 27.08.2015
(51) Int. Cl.: H04N 7/18, A47B 67/00

(54) **MIRROR CABINET WITH A CAMERA AND A SCREEN**
SPIEGELKASTEN MIT EINER KAMERA UND EINEM BILDSCHIRM
ARMOIRE À MIROIR AVEC CAMÉRA ET ÉCRAN

(30) Priority: 27.08.2014 BE 201400644
(43) Date of publication of application: 02.03.2016
(73) Proprietor: Deknudt Mirror Works N.V., 8540 Deerlijk (BE); Group de Keyzer BVBA, 8930 Menen (BE)
(72) Inventor: DEKEYZER, Dieter, 8500 Kortrijk (BE); SALDIEN, Jelle, 8500 Kortrijk (BE); DEKNUDT, Francis, 8540 Deerlijk (BE); DE KEYZER, Koen, 8930 Menen (BE)
(74) Representative: Callewaert, Koen

(56) References cited:
- DE-U1-202007 008 101
- US-A1- 2009 147 081
- US-A1- 2012 229 616

## Description

The invention concerns a device with a camera and a monitor for detecting and displaying an object, whereby this device at least comprises a first and a second door panel. These panels are movable between a closed position, in which the panels extend in one and the same plane, and an open position, in which the panels extend opposite each other and whereby one side of said first panel thus extends opposite one side of said second panel.

Such a device can be used for example in a mirrored closet for a bathroom cabinet in which a person can mirror oneself for his/her hygienic or cosmetic care.

At present, it is difficult for a person to observe the back of his/her head in sufficient detail in a mirror. According to the present state of the art, a hand mirror is used to that end which is held on the back side of the head so as to reflect this back side in a mirror situated in the field of vision of that person.

However, in such a situation it is not possible to display the back side of the head in a simple and clear manner in a first mirror situated in the field of vision of a person by using a second mirror, for example said hand mirror. Thus, for example, the display options are restricted since the face of this person must always be directed to the first mirror, such that it is not possible to provide a frontal view of the back side of the head in the first mirror by means of said second mirror. Indeed, the head of this person is situated between two mirrors then, which prevents a frontal image of the back of the head being formed in the first mirror.

Prior art document US2012/0229616 A1 discloses an electronic mirroring system allowing a user standing in between a camera and a monitor to inspect the back of his or her body.

The invention aims to remedy these disadvantages by proposing a device with which a person can perceive a complete image of the back of his/her head in a simple manner. In addition, the present invention aims to make sure that a device such as a piece of furniture, a cabinet or a mirrored cabinet retains an aesthetically acceptable look, in particular in the closed state. Thus, the invention makes it possible, for example, to obtain a mirrored cabinet which in its closed state has a substantially entirely flat and preferably reflecting front.

To this aim, said side of the first panel is provided with a camera, whereas said side of the second panel comprises a monitor, whereby an object situated in the open position between said sides, in particular between the camera and the monitor, is displayed on the latter. When a person is thus situated in the open position between the panels, he/she can easily view the back of his/her head, or of any other body part.

Practically, said panels extend in the open position in relation to one another at an angle which is smaller than 45°, and preferably at an angle which is smaller than 30°.

According to a preferred embodiment of the device according to the invention, said panels extend substantially parallel to one another in the open position.

In an advantageous manner, said first panel contains a light source on said side of the panel which makes it possible to illuminate said object.

According to an interesting embodiment of the device according to the invention, said camera can be moved in a substantially vertical direction on said side of the first panel.

According to a special embodiment of the device according to the invention, the latter comprises a cabinet which exhibits said door panels, whereby in the closed position, the cabinet is closed by said panels.

According to a very interesting embodiment of the device according to the invention, said door panels have an inner face and an outer face, whereby in said closed position, the outer face of the panels is visible, while said camera and said monitor are provided on the inner face of these panels.

Other particularities and advantages of the invention will become clear from the following description of some specific embodiments of the device according to the invention. This description is given by way of example only and does not restrict the scope of the claimed protection in any way; the reference figures used hereafter refer to the attached drawings.
Figure 1 is a schematic representation in perspective of a mirrored cabinet in closed position according to a first embodiment of the device according to the invention.
Figure 2 is a schematic representation in perspective of the mirrored cabinet from figure 1 in an open position.
Figure 3 is a schematic representation in perspective of a mirrored cabinet in a closed position according to a second embodiment of the device according to the invention.
Figure 4 is a schematic representation in perspective of the mirrored cabinet from figure 3 in an open position.
Figure 5 is a schematic top view of a mirrored cabinet in a closed position according to a third embodiment of the device according to the invention.
Figure 6 is a schematic top view of the mirrored cabinet from figure 5 in an open position.
Figure 7 is a schematic top view of the mirrored cabinet from figures 1 and 2 in an open position, in which the door panels extend parallel to one another and a person is directed with his/her face to the camera.
Figure 8 is a top view as in figure 7, wherein the door panels are placed at an angle in relation to one another in an open position.

In the different figures, the same reference figures refer to identical or analogous elements.

The invention in general relates to a device such as a piece of furniture or a closet with several door panels. These door panels can be moved between a closed and an open position in order to close or open the piece of furniture or closet. Normally, the door panels extend in one and the same plane in the closed position, whereas in the open position the faces of these door panels usually extend opposite one another. In the open position, the door panels preferably extend practically parallel to one another. By the face of a door panel is meant in this description one of both large flat sides of the door panel. The faces of a door panel are thus bordered by the edges defining the contour of the door panel.

The device according to the invention has a door panel provided with a camera and a door panel on which is mounted a monitor cooperating with this camera. In the open position, the faces of these door panels extend opposite one another, such that the camera is positioned in front of the monitor.

By a door panel is understood in this description any panel which can be moved between two positions, in particular between an open and a closed position.

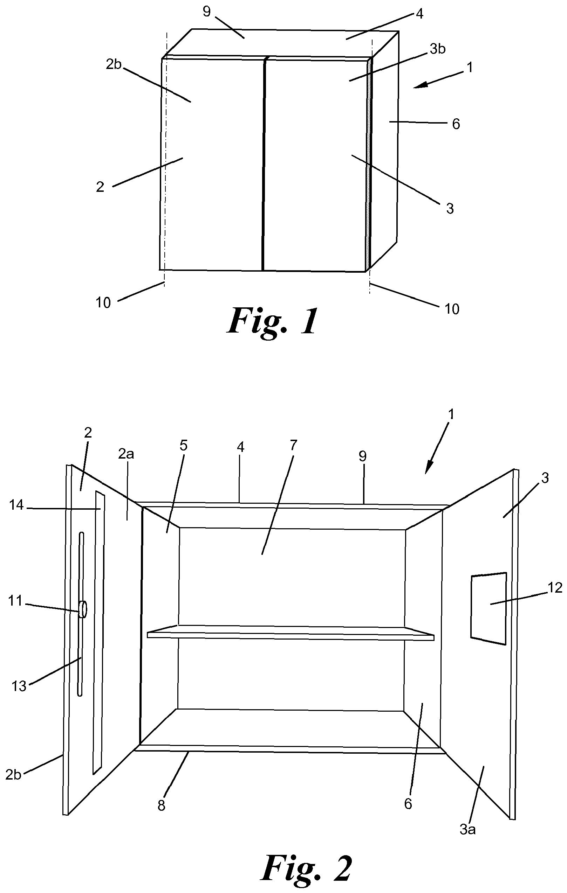

Figures 1 and 2 represent a first embodiment of the device according to the invention. This device consists of a mirrored cabinet 1 having two door panels 2 and 3 and a cabinet section 4. This cabinet section 4 is preferably beam-shaped and has two parallel lateral walls 5 and 6, a rear wall 7, a bottom 8 and a top side 9.

Figure 1 represents the cabinet 1 as closed, whereby both door panels 2 and 3 extend in one and the same plane and are situated in a closed position.

Figure 2 shows this cabinet 1 as opened, whereby the door panels 2 and 3 have thus been moved from said closed position into their open position. In the proposed embodiment of the device, the panels 2 and 3 are hinge-mounted to the respective lateral walls 5 and 6 of the cabinet section 4, such that they are moved from the open position into the closed position, and vice versa, by means of a rotational movement around a respective hinge axis 10. In said open position, the door panels 2 and 3 preferably extend substantially parallel to one another or they form a mutual angle that is smaller than 45°, and preferably smaller than 30°. Usually, this angle is smaller than 15° or smaller than 10°.

In said open position, the door panels 2 and 3 thus extend opposite one another, whereby a face 2a of a first panel 2 extends opposite a face 3a of the second panel 3. These faces 2a and 3a more specifically form the inner face of the door panels 2 and 3. In the closed position of the door panels, these faces 2a and 3a thus are no longer visible and are directed to said rear wall. The faces of the door panels opposite these faces 2a and 3a thus form the outer faces 2b and 3b of the respective panels 2 and 3, and they are visible in said closed position.

The face 2a, in particular the inner face of the first panel 2, is equipped with a camera 11 which cooperates with a monitor 12 provided on the face 3a of the second panel 3. This monitor 12 is thus mounted on the inner face of the second panel 3.

Consequently, in the open position of panels 2 and 3, the camera 11 and the monitor 12 are situated at a predetermined distance from each other.

A person situated between these faces 2a and 3a, while the panels are in the open position, is thus observed by the camera 11 and represented on the monitor 12. More specifically, in this open position, the camera 11 extends opposite the monitor 12, such that a person having his/her face directed to the monitor 12 and being situated between the latter and the camera 11, will be able to observe the back of his/her head on the monitor 12.

Consequently, in the device as represented in figures 1 and 2, the outer face 2b and 3b of the panels 2 and 3 will be visible in said closed position, whereas the camera 11 and the monitor 12, provided on the inner face 2a and 3a, will not be visible in this position. Thus is obtained a cabinet whose look is identical to that of a traditional cabinet in the closed position. As a result, in the closed position, the device according to the invention has an almost completely plain and smooth look.

In order to enable persons of different lengths to use the device, the height of the camera 11 can be adjusted. Thus, the camera 11 can be moved for example according to a substantially vertical direction over the face 2a concerned of the panel 2.

In the embodiment of the device which is represented in figures 1 and 2, the inner face 2a of the panel 2 to this end has a vertical guide rail 13, for example, along which the camera can be displaced and fixed at a suitable height.

Further, the face 2a of the door panel 2 on which the camera 2 has been mounted is preferably equipped with a light source 14 making it possible to illuminate the face of the object, or of the person, situated in the field of vision of the camera 11. This light source makes it possible to detect a clear image with the aid of the camera . In the embodiment represented in figure 2, the light source 14 extends in the vertical direction over a portion of the face 2a. This light source 14 preferably extends over a vertical distance which corresponds at least to the vertical distance over which the camera 11 can be moved.

The camera 11 and the monitor 12 are connected in such a way, and thus cooperate in such a way, that images observed by the camera 11 are displayed almost simultaneously on the monitor 12. More specifically, means are provided for connecting the camera 11 to the monitor 12 that allow to display an image observed by the camera practically without any delay on the monitor. This makes sure that a person observing the back of his/her head on the monitor 12 has the same experience as if he/she were reflecting himself/herself in a mirror. Said means include for example a computer.

Naturally, said means possibly also allow to store certain images in a memory to be displayed at a later time or to display a still image of a snap shot.

To this end, the device may be provided with control buttons cooperating with said means to control the camera or the monitor, for example to zoom in or out or to display a still image. These control buttons may be physical buttons provided for example in the vicinity of the monitor, or they can be realized by touching the monitor when the latter is formed of a touch screen.

The device according to the invention is further provided for example with a sensor, not represented in the figures, cooperating with the camera 11 and the monitor 12. This sensor generates a signal when at least one of the aforesaid panels is moved from the closed position into the open position so as to switch on the camera and the monitor. When both panels are in the closed position, a signal will be generated as well, switching off the camera 11 and the monitor 12.

Preferably, at least the inner face 3a of the door panel 3 containing the monitor 12 has a mirroring surface. This enables a person looking at oneself in this mirroring surface to simultaneously observe the back of his/her head, or another body part, on the monitor 12. Consequently, this embodiment of the invention allows a person to have a nearly full view of his/her head at a glance, whereby he/she sees his/her face in the mirroring surface and, simultaneously, via the monitor 12, the back of his/her head, in particular a frontal view of the back of the head.

In this case, the monitor 12 is mounted for example in a recess provided to this end in the mirroring surface of said face 3a of the panel 3.

It is also possible for the face 3a of the second panel 3 to have a mirror in which said monitor 12 is built-in. Thus, this mirror consists for example of a transparent glass plate with a reflective layer provided on the rear face. The monitor 12 is in this case mounted behind the glass plate, whereby no reflective layer is provided in the position of the monitor 12. Thus, the inner face 3a of the door panel 3 consist of a continuous flat surface through which the images, displayed by the monitor, can be observed.

In addition, also the face 2a on which said camera 11 is mounted can be provided with a mirroring surface.

According to an interesting embodiment of the device according to the invention, both faces 2a, 2b and 3a, 3b of the door panels 2 and 3 are reflective, however. Thus, the door panels 2 and 3 each form a double-sided mirror.

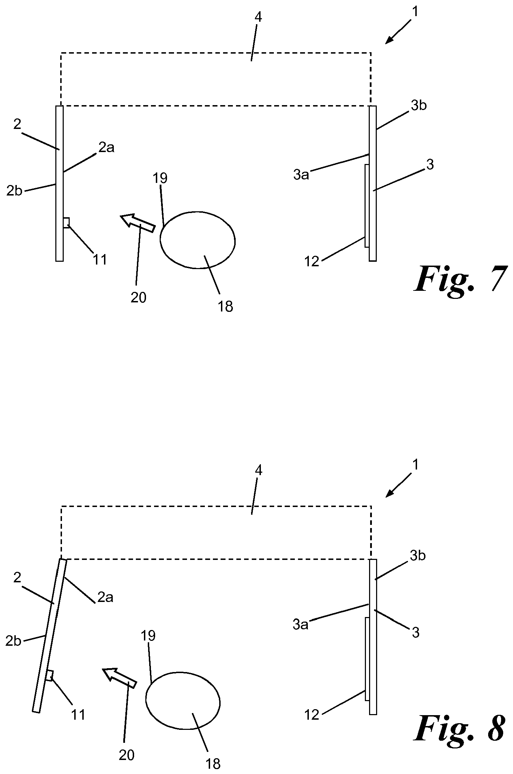

When said face 2a of the first panel 2 has a mirroring surface, this will also allow, for example, to observe an enlargement of parts of the face. This is further described below with reference to figures 7 and 8.

Just as the monitor 12 may be built-in in a mirror provided on the face 3a concerned of the second panel 3, as described above, it is also possible to build in the camera 11 and/or the light source 14 in an analogous manner in a mirror provided on the face 2a of the first door panel 2.

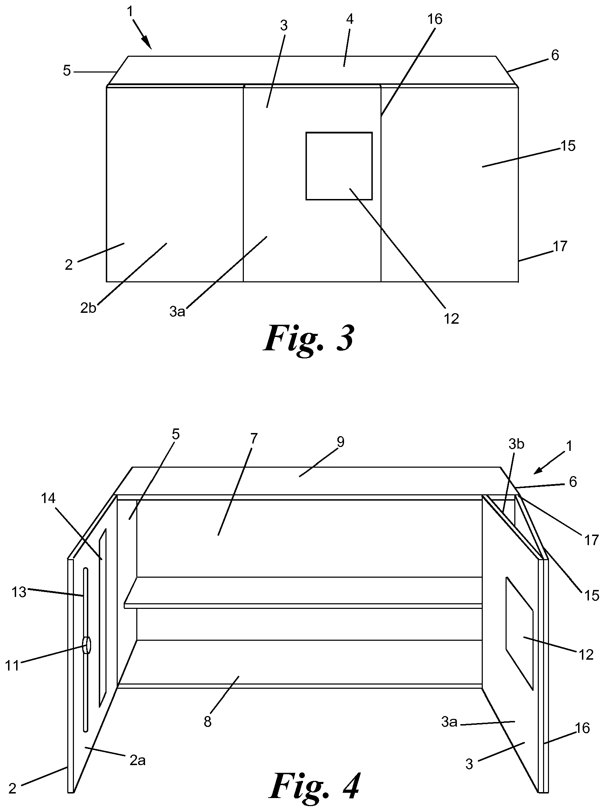

Figures 3 and 4 represent a second embodiment of the device according to the invention. This embodiment differs from the above-described embodiment in that the device has three door panels 2, 3 and 15 instead of two door panels.

A first door panel 2 comprising a camera 11 and a light source 14 corresponds to the first door panel from the above-described first embodiment of the invention.

However, the mirrored cabinet 1 according to this second embodiment comprises a second door panel 3 and a third door panel 15 which are hinge-mounted to a lateral edge 16, such that they form a folding door. The third door panel is hereby hinge-mounted on the edge 17, opposite the lateral edge 16, to the lateral wall 6 of the cabinet section 4. Such a folding door is known as such to someone skilled in the art.

In this embodiment, the monitor 12 is mounted on the face 3a of the second panel 3 forming the outer face of this panel 3. Thus, the monitor 12 is visible in the closed position of the mirrored cabinet 1, as represented in figure 1. The inner face 3b of this panel 3 is neither visible in the closed, nor in the open position of this panel 3.

When the first panel 2 and the second panel 3 are in the open position, as represented in figure 4, the camera 11 will extend opposite the monitor 12, such that a person situated between the camera 11 and the monitor 12 will be able to observe the back of his/her head on the monitor 12. In this open position of the panels 2 and 3, they extend at an angle in relation to one another which is for example smaller than 45° and preferably smaller than 30°.

This second embodiment not only makes it possible to apply the invention to a mirrored cabinet comprising a folding door, but also makes sure that the monitor can be used when the mirrored cabinet 1 is closed and thus in a closed position. In that case, the monitor can cooperate for example with a computer, or assume the shape of a tablet computer, such that information can be displayed on the front face of the closed cabinet 1.

According to a variant of this embodiment of the invention, the device may comprise for example two folding doors which are each formed of two door panels. Consequently, the first panel 2 is also part of a folding door with an inner face 2b and an outer face 2a, whereby a camera 11 and possibly a light source 14 are provided on the outer face 2a of this panel 2. In the closed position, this outer face is visible and as a result shows the camera 11. In this case, the camera 11 is for example built-in in the mirroring surface of this second panel 2.

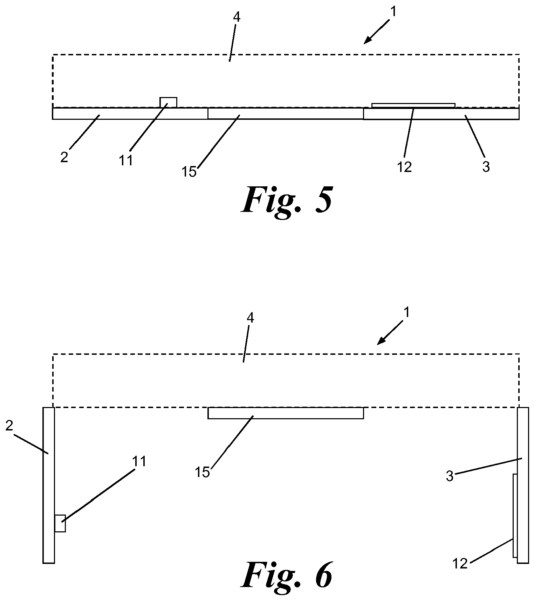

Figures 5 and 6 represent yet another embodiment of the device according to the invention. This embodiment differs from the above-described first embodiment of the invention in that it has three independently hinge-mounted door panels 2, 3 and 15.

In figure 5, the door panels 2, 3 and 15 are represented in a closed position, whereas in figure 6 the door panels 2 and 3 are in the open position and panel 15 in the closed position. The additional door panel 15 extends between the first door panel 2 and the second door panel 3.

Figure 7 shows an example of a possible use of the mirrored cabinet 1 from figures 1 and 2. The mirrored cabinet 1 is represented in the open position in this figure, whereby the head 18 of a person is situated between the two parallel door panels 2 and 3. The face 19 of this person is hereby directed to the mirroring face 2a of the door panel 2, as is schematically represented by arrow 20.

The computer means to which the camera 11 and the monitor 12 are connected make it possible to zoom in on an image created with the camera 11 and thus represent it enlarged on the screen 12 provided on the door panel 3 opposite the camera 11. Thus, said person can control these computer means with the aid of a control provided to this end so as to display a part of for example the face, such as an eye, greatly enlarged on the monitor 12. This enlarged image may be possibly mirrored on the monitor 12.

The person whose face 19 is directed to the mirroring face 2a of the panel 2 will thus observe the image of the monitor 12 on this mirroring face 2a. Thus, this person can observe a great enlargement of part of his/her face 19 on the mirroring face 2a connected to the camera 11, without his/her face having to be directed directly to the monitor 12.

Figure 8 represents the same situation as in figure 7, whereby the door panels 2 and 3 mutually form an angle between 5° and 10°, however. The person whose face 19 is directed to the camera 11 may possibly manually adjust the angular position of the door panel 2 to the camera 11 in order to optimize the position of the image of the monitor 12 created on the mirroring face 2a.

The mirrored cabinet 1 represented in figures 7 and 8 has door panels 2 and 3 with a width situated for example between 50 and 60 cm, such that, as a consequence, the frontal width of the mirrored cabinet 1 is practically situated between 100 cm and 120 cm.

In the above-described embodiments of the device according to the invention, the camera has been mounted such that it can be moved in the vertical direction. Of course, the camera 11 may also be provided in a fixed position on the face 2a concerned of the first panel 2.

When the camera 11 is mounted in a fixed position, it may possibly be mounted such that it can at least tilt in a vertical plane extending transversely to the first panel 2. In this manner, it is possible for example to adapt the field of vision of the camera 11 as a function of the length of a person or to focus it on other body parts than the head. Thus, it is also possible for the camera 11 to be tilted in a horizontal plane or to be subjected to an arbitrary rotation around a fixed point.

According to yet another variant of the invention, the face 2a of the first panel 2 may have fastening means for the camera 11 instead of a guide rail, provided in predetermined distinct positions, for example according to a vertical direction. Thus, these fastening means make it possible to fasten the camera in a detachable manner in each of these positions. Consequently, the field of vision of the camera 11 can be adjusted by moving it into one of said distinct positions.

In that case the fastening means will comprise for example magnetic contacts enabling the camera to be fastened in a consistent manner in each of said distinct positions. The camera hereby has electrical contacts for transmitting a signal to the monitor and for an electric power supply for the camera. Corresponding electrical contacts are present in each of said distinct positions on the panel concerned. This makes it possible to fasten the camera in a consistent manner to the panel in each of the distinct positions by means of the magnetic contacts, whereby the corresponding electrical contacts of the camera and of the panel are connected to one another. The electrical contacts provided on the panel are connected to a corresponding circuit housed in a hollow recess provided to that end in the core of the panel.

In general, the camera may be optionally detachable so that it can be handled manually in order to choose a field of vision for the camera as a function of the body part or object one wishes to see on the monitor. In this case, the camera contains for example a battery and it may be wirelessly connected to the monitor.

In some embodiments of the invention, a second camera may be present which can be handled manually and which is connected to the monitor for example via a wired connection, either or not temporary.

Naturally, it is also possible to provide several cameras on the face 2a concerned of the first door panel 2, while a control is provided to switch on or off a selected camera or to select an image from the images coming from the different cameras and to show this selected image on the monitor.

Naturally, the invention is not restricted to the above-described embodiments of the device; on the contrary, within the scope of the invention, someone skilled in the art may contemplate several variants.

Although it is very interesting to provide the monitor in the face of a door panel provided with a mirroring surface, it is for example not necessary for the device according to the invention to comprise a mirrored cabinet, and the invention can be applied to any piece of furniture containing movable door panels. Thus, it is possible for example to apply the invention in what is called a folding screen or a movable partition wall with hinged panels.

Further, said camera 11 preferably has an optical axis which is substantially perpendicular to the plane of the monitor 12 in said open position.

Also the position of the monitor 12 on the panel concerned may vary as a function of for example aesthetic considerations. Thus, the monitor in the mirrored cabinet from figures 3 and 4 may be provided for example centrally on the door panel.

## Claims

1. Device for observing and displaying a person or part of a person, with at least one camera (11) and one monitor (12), whereby this device comprises at least a first and a second door panel (2,3), which panels (2,3) can be moved between a closed position, in which these panels (2,3) extend according to one and the same plane, and an open position, in which said panels (2,3) extend opposite one another, such that a face (2a) of said first panel (2) extends opposite a face (3a) of said second panel (3), wherein said face (2a) of the first panel (2) is provided with said camera (11), whereas said face (3a) of the second panel (3) comprises said monitor (12), whereby a person or part of a person situated, in said open position, between said faces (2a,3a), in particular between the camera (11) and the monitor (12), is displayed on the latter.

2. Device according to claim 1, whereby in the open position, said panels (2,3) extend in relation to one another at an angle which is smaller than 45°.

3. Device according to claim 1 or 2, whereby in said open position, said panels (2,3) extend substantially parallel to one another.

4. Device according to any one of claims 1 to 3, whereby said camera (11) can be moved in a substantially vertical direction on said face (2a) of the first panel (2).

5. Device according to any one of claims 1 to 4, whereby said face (2a) of the first panel (2) comprises fastening means for said camera (11) provided in predetermined distinct positions, in a vertical direction, making it possible for said camera (11) to be fastened in a detachable manner in each of these positions.

6. Device according to any one of claims 1 to 5, whereby said camera (11) can at least be tilted in a vertical plane extending transversally to said first panel (2).

7. Device according to any one of claims 1 to 6, with a sensor cooperating with said camera (11) and said monitor (12), whereby this sensor generates a signal for switching the camera (11) and the monitor (12) on when at least one of said panels (2,3) is moved from said closed position to said open position.

8. Device according to any one of claims 1 to 7, whereby said face (2a,3a) of the panels (2,3) has a mirroring surface.

9. Device according to any one of claims 1 to 8, whereby said face (3a) of the second panel (3) has a mirror with a recess in which said monitor is mounted.

10. Device according to any one of claims 1 to 9, whereby said face (3a) of the second panel (3) comprises a mirror in which said monitor (12) is built in.

11. Device according to any one of claims 1 to 10, in which said panels (2,3) comprise a double-sided mirror.

12. Device according to any one of claims 1 to 11, whereby it comprises a cabinet (1) with said door panels (2,3), whereby in said closed position, the cabinet (1) is closed by said panels (2,3).

13. Device according to claim 12, whereby said door panels (2,3) have an inner face and an outer face, whereby in said closed position, the outer face of the panels (2,3) is visible, whereas said camera (11) and said monitor (12) are provided on the inner face of these panels (2,3).

14. Device according to claim 12, whereby at least said second panel (3) is part of a folding door with an inner face and an outer face, whereby in said closed position, the outer face is visible and said monitor (12) is provided on the outer face.

15. Device according to claim 12, whereby at least said first panel (2) is part of a folding door with an inner face and an outer face, whereby in said closed position, the outer face is visible and said camera (11) is provided on the outer face.

## Patentansprüche

1. Vorrichtung zum Beobachten und Anzeigen einer Person oder eines Teils einer Person mit wenigstens einer Kamera (11) und einem Bildschirm (12), wobei diese Vorrichtung wenigstens einen ersten und einen zweiten Türflügel (2, 3) umfasst, wobei die Flügel (2, 3) zwischen einer geschlossenen Stellung, in der sich diese Flügel (2, 3) in ein und derselben Ebene erstrecken, und einer offenen Stellung, in der sich die Flügel (2, 3) einander gegenüberliegend erstrecken, sodass sich eine Fläche (2a) des ersten Flügels (2) entgegengesetzt zu einer Fläche (3a) des zweiten Flügels (3) erstreckt, bewegt werden können, wobei die Fläche (2a) des ersten Flügels (2) mit der Kamera (11) versehen ist, während die Fläche (3a) des zweiten Flügels (3) den Bildschirm (12) umfasst, wobei eine Person oder ein Teil einer Person, die sich in der offenen Stellung zwischen den Flächen (2a, 3a), insbesondere zwischen der Kamera (11) und dem Bildschirm (12) befindet, auf Letzterem angezeigt wird.

2. Vorrichtung nach Anspruch 1, wobei sich in der offenen Stellung die Flügel (2, 3) im Verhältnis zueinander in einem Winkel erstrecken, der kleiner als 45° ist.

3. Vorrichtung nach Anspruch 1 oder 2, wobei sich in der offenen Stellung die Flügel (2, 3) im Wesentlichen parallel zueinander strecken.

4. Vorrichtung nach einem der Ansprüche 1 bis 3, wobei die Kamera (11) in einer im Wesentlichen vertikalen Richtung auf der Fläche (2a) des ersten Flügels (2) bewegt werden kann.

5. Vorrichtung nach einem der Ansprüche 1 bis 4, wobei die Fläche (2a) des ersten Flügels (2) Befestigungsmittel für die Kamera (11) umfasst, die in vorgegebenen unterschiedlichen Positionen in einer vertikalen Richtung bereitgestellt sind und es ermöglichen, dass die Kamera (11) auf abnehmbare Weise an jeder dieser Positionen befestigt werden kann.

6. Vorrichtung nach einem der Ansprüche 1 bis 5, wobei die Kamera (11) wenigstens in einer vertikalen Ebene, die sich quer zu dem Flügel (2) erstreckt, geneigt sein kann.

7. Vorrichtung nach einem der Ansprüche 1 bis 6 mit einem Sensor, der mit der Kamera (11) und dem Bildschirm (12) zusammenwirkt, wobei dieser Sensor ein Signal zum Einschalten der Kamera (11) und des Bildschirms (12) erzeugt, wenn wenigstens einer der Flügel (2, 3) aus der geschlossenen Stellung in die offene Stellung bewegt wird.

8. Vorrichtung nach einem der Ansprüche 1 bis 7, wobei die Fläche (2a, 3a) der Flügel (2, 3) eine spiegelnde Oberfläche aufweist.

9. Vorrichtung nach einem der Ansprüche 1 bis 8, wobei die Fläche (3a) des zweiten Flügels (3) einen Spiegel mit einer Ausnehmung aufweist, in welcher der Bildschirm angebracht ist.

10. Vorrichtung nach einem der Ansprüche 1 bis 9, wobei die Fläche (3a) des zweiten Flügels (3) einen Spiegel umfasst, in den der Bildschirm (12) eingebaut ist.

11. Vorrichtung nach einem der Ansprüche 1 bis 10, wobei die Flügel (2, 3) einen doppelseitigen Spiegel umfassen.

12. Vorrichtung nach einem der Ansprüche 1 bis 11, wobei sie einen Schrank (1) mit den Türflügeln (2, 3) umfasst, wobei der Schrank (1) in der geschlossenen Stellung durch die Flügel (2, 3) verschlossen ist.

13. Vorrichtung nach Anspruch 12, wobei die Türflügel (2, 3) eine Innenseite und eine Außenseite aufweisen, wobei in der geschlossenen Stellung die Außenseite der Flügel (2, 3) sichtbar ist, während die Kamera (11) und der Bildschirm (12) an der Innenseite dieser Flügel (2, 3) bereitgestellt sind.

14. Vorrichtung nach Anspruch 12, wobei wenigstens der zweite Flügel (3) Teil einer Falttür mit einer Innenseite und einer Außenseite ist, wobei in der geschlossenen Stellung die Außenseite sichtbar ist und der Bildschirm (12) an der Außenseite bereitgestellt ist.

15. Vorrichtung nach Anspruch 12, wobei wenigstens der erste Flügel (2) Teil einer Falttür mit einer Innenseite und einer Außenseite ist, wobei in der geschlossenen Stellung die Außenseite sichtbar ist und die Kamera (11) an der Außenseite bereitgestellt ist.

## Revendications

1. Dispositif pour observer et afficher une personne ou une partie d'une personne, à l'aide d'au moins une caméra (11) et un écran (12), dans lequel ce dispositif comprend au moins un premier et un second panneaux de porte (2, 3), lesdits panneaux (2, 3) pouvant être déplacés entre une position fermée, dans laquelle ces panneaux (2, 3) s'étendent suivant un seul et même plan, et une position ouverte, dans laquelle lesdits panneaux (2, 3) s'étendent l'un en face de l'autre, de telle sorte qu'une face (2a) dudit premier panneau (2) s'étende en face d'une face (3a) dudit second panneau (3), dans lequel ladite face (2a) du premier panneau (2) est équipée de ladite caméra (11), tandis que ladite face (3a) du second panneau (3) comprend ledit écran (12), dans lequel une personne ou une partie d'une personne située, dans ladite position ouverte, entre lesdites faces (2a, 3a), en particulier entre la caméra (11) et l'écran (12), est affichée sur ce dernier.

2. Dispositif selon la revendication 1, dans lequel, dans la position ouverte, lesdits panneaux (2, 3) s'étendent l'un par rapport à l'autre selon un angle qui est inférieur à 45°.

3. Dispositif selon la revendication 1 ou 2, dans lequel, dans ladite position ouverte, lesdits panneaux (2, 3) s'étendent sensiblement parallèlement l'un à l'autre.

4. Dispositif selon l'une quelconque des revendications 1 à 3, dans lequel ladite caméra (11) peut être déplacée dans une direction sensiblement verticale sur ladite face (2a) du premier panneau (2).

5. Dispositif selon l'une quelconque des revendications 1 à 4, dans lequel ladite face (2a) du premier panneau (2) comprend des moyens de fixation pour ladite caméra (11) prévus dans des positions distinctes prédéterminées, dans une direction verticale, afin de permettre que ladite caméra (11) puisse être attachée d'une manière détachable dans chacune de ces positions.

6. Dispositif selon l'une quelconque des revendications 1 à 5, dans lequel ladite caméra (11) peut au moins être inclinée dans un plan vertical qui s'étend transversalement audit premier panneau (2).

7. Dispositif selon l'une quelconque des revendications 1 à 6, comprenant un capteur qui coopère avec ladite caméra (11) et ledit écran (12), dans lequel ce capteur génère un signal pour commuter la caméra (11) et l'écran (12) lorsqu'au moins un desdits panneaux (2, 3) est déplacé à partir de ladite position fermée jusqu'à ladite position ouverte.

8. Dispositif selon l'une quelconque des revendications 1 à 7, dans lequel ladite face (2a, 3a) des panneaux (2, 3) présente une surface réfléchissante.

9. Dispositif selon l'une quelconque des revendications 1 à 8, dans lequel ladite face (3a) du second panneau (3) présente un miroir comportant un évidement à l'intérieur duquel ledit écran est monté.

10. Dispositif selon l'une quelconque des revendications 1 à 9, dans lequel ladite face (3a) du second panneau (3) comprend une miroir dans lequel ledit écran (12) est intégré.

11. Dispositif selon l'une quelconque des revendications 1 à 10, dans lequel lesdits panneaux (2, 3) comprennent un miroir à double face.

12. Dispositif selon l'une quelconque des revendications 1 à 11, dans lequel il comprend une armoire (1) pourvue desdits panneaux de porte (2, 3), dans lequel, dans ladite position fermée, l'armoire (1) est fermée par lesdits panneaux (2, 3).

13. Dispositif selon la revendication 12, dans lequel lesdits panneaux de porte (2, 3) présentent une face intérieure et une face extérieure, dans lequel, dans ladite position fermée, la face extérieure des panneaux (2, 3) est visible, tandis que ladite caméra (11) et ledit écran (12) sont prévus sur la face intérieure de ces panneaux (2, 3).

14. Dispositif selon la revendication 12, dans lequel au moins ledit second panneau (3) fait partie d'une porte pliante présentant une face intérieure et une face extérieure, dans lequel, dans ladite position fermée, la face extérieure est visible et ledit écran (12) est prévu sur la face extérieure.

15. Dispositif selon la revendication 12, dans lequel au moins ledit premier panneau (2) fait partie d'une porte pliante présentant une face intérieure et une face extérieure, dans lequel, dans ladite position fermée, la face extérieure est visible et ladite caméra (11) est prévue sur la face extérieure.
